(19) Europäisches Patentamt
European Patent Office
Office européen des brevets

(11) **EP 4 625 381 A1**

(12) **EUROPEAN PATENT APPLICATION**

(43) Date of publication:
**01.10.2025 Bulletin 2025/40**

(21) Application number: 24386034.3

(22) Date of filing: **26.03.2024**

(51) International Patent Classification (IPC):
**G08B 21/02** (2006.01)    **A62B 9/00** (2006.01)

(52) Cooperative Patent Classification (CPC):
**G08B 21/02; A62B 9/006**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Dräger Safety AG & Co. KGaA**
**23560 Lübeck (DE)**

(72) Inventors:
• **Kolbeinson, Sigve Osdal**
**Blyth, Northumberland NE24 4RG (GB)**
• **Goutsos, Konstantinos**
**Blyth, Northumberland NE24 4RG (GB)**

(74) Representative: **Haseltine Lake Kempner LLP**
**One Portwall Square**
**Portwall Lane**
**Bristol BS1 6BH (GB)**

(54) **THERMAL ALARM HANDLING**

(57) There is provided a computer-implemented method for handling thermal alarms associated with a wearer of a breathing apparatus of a network. The method comprises generating (110), based on a thermal profile indicative of a thermal exposure of the wearer of the breathing apparatus, one or more of a first thermal alarm and a second thermal alarm. The generating comprises if the thermal profile meets a first criterion, generating the first thermal alarm at the breathing apparatus and, if the thermal profile meets a second criterion, initiating transmission, towards a network node of the network, of information indicative of the second thermal alarm.

Generate one or more of a first thermal alarm and a second thermal alarm — 110

Fig. 2

EP 4 625 381 A1

## Description

Technical Field

The present disclosure relates to methods for handling thermal alarms and to apparatus configured to operate in accordance with those methods.

Background

Emergency services (e.g. fire services) are organisations that ensure public safety, security and health by addressing and resolving different emergencies. As such, emergency services require every advantage possible when dealing with emergency response incidents. This is especially true as emergency services are required to respond to increasingly more complex incidents. Indeed, an emergency response incident can involve many individuals, including both responders and members of the public, and responders are commonly equipped with specialised equipment which must be carefully monitored and maintained in order to provide safety for the responders. For example, fire services regularly deal with toxic environments created by combustible materials, resulting in smoke, oxygen deficiency, elevated temperatures, poisonous atmospheres, and violent air flows. To combat some of these risks, firefighters carry breathing apparatus (BA). The proper management of such specialised equipment can mean the difference between a successful incident outcome and disaster.

Moreover, emergency services must be ready to adapt to an array of different environments (e.g. both natural and man-made), which cause further challenges with organising and effectively dealing with an incident. As such, ineffective management of such incidents can cause serious harm to the public and result in irreparable damage to infrastructure.

In the past, emergency services (e.g. fire services) have relied on analogue tools to monitor and control the handling of emergency response incidents. For example, an entry control operative (ECO) will commonly use a physical board (e.g. an entry control board (ECB)) for keeping track of fire fighters deployed at an incident (e.g. a building fire). In such a scenario, the ECO monitors the incident by physically organising the board with the help of "tallies", which visibly show the name of the fire fighter being deployed at the incident and the time at which said fire fighter entered the incident. Thus, the tallies can be physical elements which are added and removed from the board to allow the ECO to keep track of the personnel deployed at an incident. The addition of a physical tally to the board can act as an incident registration for the corresponding firefighter. In addition to the physical board, the ECO commonly utilises walkie-talkies to manually control the incident and receive updates on the condition of personnel.

In recent years, some emergency services have adopted telemetry techniques which provide for enhanced communication between the personnel deployed at an incident. Specifically, emergency services personnel can be provided with equipment which enables (e.g. wireless) communication with other personnel and provides for the sharing of information describing the status of a wearer of said equipment, and of the equipment itself. As such, emergency services personnel can be provided with equipment that enables the transmission of vital information in real time to an ECO, which gives the ECO more time to make tactical, and potentially lifesaving decisions. Therefore, techniques utilising enhanced communication provide a significant advantage for the overall safety of individuals involved in the incident and provides greater reassurance for responders during a deployment.

It is useful to be able to monitor a physical status of a wearer of a BA, especially if they are involved in an emergency response incident. Indeed, a wearer of a BA may be required to work in a hazardous environment (e.g. a burning building) which exposes the wearer to danger. Specifically, wearers of BA (e.g. fire fighters) are regularly exposed to exceedingly high temperatures for long periods of time. Such exposure leads to excessive strain and thermal exhaustion which can often have long-lasting effects that are not immediately obvious. In critical scenarios of direct flame exposure (e.g. such as rescue operations and retreats from flashover conditions), the wearer can sustain immediate injury and the BA can be damaged. There is thus a desire to provide improved techniques for monitoring a physical status of a wearer of a BA, which accurately determines whether the wearer's thermal exposure is reaching dangerous levels, and reduces the amount of time between an event worthy of an alarm and the necessary entities being provided with the information required to properly deal with the event.

Summary

As noted above, there is a desire to provide improved techniques for monitoring a physical status of a wearer of a BA, especially when said wearer is susceptible to potentially dangerous levels of thermal exposure.

Therefore, according to a first aspect of the disclosure, there is provided a method for handling thermal alarms associated with a wearer of a breathing apparatus of a network. The method is computer-implemented. The method comprises generating, based on a thermal profile indicative of a thermal exposure of the wearer of the breathing apparatus, one or more of a first thermal alarm and a second thermal alarm. The generating comprises, if the thermal profile meets a first criterion, generating the first thermal alarm at the breathing apparatus, and, if the thermal profile meets a second criterion, initiating transmission, towards a network node of the network, of information indicative of the second thermal alarm.

According to a second aspect of the disclosure, there is provided an entity comprising processing circuitry configured to operate in accordance with the method described herein.

According to a third aspect of the disclosure, there is provided a computer program product, embodied on a non-transitory machine-readable medium. The computer program product comprises instructions which are executable by processing circuitry to cause the processing circuitry to perform the method described herein.

There are thus provided improved techniques for handling thermal alarms associated with a wearer of a breathing apparatus of a network. The techniques are improved as they remove the need (e.g. of the wearer of the BA and/or an incident controller) to manually monitor thermal exposure and minimise the latency between the wearer receiving a potentially dangerous thermal exposure and remedial action(s) (e.g. to evacuate the wearer from an incident). The improved techniques also reduce the latency between the occurrence of the wearer of the BA receiving serious thermal exposure and such information being obtained by other entities in the network (e.g. a network node being operated by an incident controller). In this way, other entities of the network can be quickly informed when the wearer of the BA has received a thermal exposure that requires urgent action (e.g. to prevent serious harm to the wearer). Therefore, the techniques enable the generation of alarms that allow the wearer and other members of the network to make time-critical decisions (e.g. about whether to withdraw from an incident) to ensure the health and safety of the wearer.

Brief description of the drawings

Exemplary embodiments will now be described, by way of example only, with reference to the following drawings, in which:

Fig. 1 is a schematic illustration of an entity according to an embodiment;

Fig. 2 is a block diagram illustrating a method according to an embodiment;

Fig. 3 is a schematic illustration of a system according to an embodiment;

Fig. 4 is a block diagram illustrating a breathing apparatus according to an embodiment;

Figs. 5 and 6 are block diagrams illustrating a method according to some embodiments;

Figs. 7A-7C are graphs illustrating a thermal profile of a wearer of a BA; and

Fig. 7D is a graph illustrating a relationship between temperature and time.

Detailed Description

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

As mentioned above there is provided herein a technique for handling thermal alarms associated with a wearer of a breathing apparatus of a network.

The BA referred to herein may be any type of BA. For example, the BA referred to herein may be configured to perform the method described herein. More generally, a BA may be any type of apparatus (e.g. device) which is worn by a wearer of the BA in order to provide a supply of breathable gas (e.g. air) to the wearer. As such, a BA can be advantageously utilised in an atmosphere that is immediately dangerous to life or health. In an example, the BA referred to herein may be a self-contained breathing apparatus (SCBA) and/or a compressed air breathing apparatus (CABA). The BA referred to herein may be a closed-circuit BA. Alternatively, the BA referred to herein may be an open-circuit BA. The BA referred to herein may comprise a lung demand regulator, a face mask, a compressed breathing gas tank, and/or a support frame.

The techniques described herein can be used in respect of any network, such as any communications or telecommunications network, e.g. cellular network. The network referred to herein may be a radio network. In some examples, the network may comprise a Wi-Fi network (e.g. based on the Institute of Electrical and Electronics Engineers (IEEE) 802.11 family of standards). Alternatively, or in addition, the network may comprise a Bluetooth network (e.g. based on the IEEE 802.15.1 family of standards). Any one or more of the entity referred to herein, the breathing apparatus referred to herein, and the network node referred to herein may communicate (e.g. directly or indirectly) via the network described herein.

A thermal alarm may be described herein as a warning (e.g. of danger). A thermal alarm may comprise an alert and/or a distress signal. For example, a thermal alarm may be indicative that a breathing apparatus wearer's thermal exposure has reached a pre-defined level. For example, the thermal alarm may warn the wearer that their thermal exposure has reached an unsafe level, or that their thermal exposure is close to reaching the unsafe level. As described herein, the generation of a thermal alarm is based on a thermal profile.

A thermal profile, as referred to herein, is indicative of a thermal exposure of a wearer of a breathing apparatus. The thermal profile may comprise information indicative of a total thermal exposure received by the wearer. For example, the thermal profile may comprise a set of data points indicative of a change in the wearer's thermal exposure over time. The thermal profile may be (e.g. conditionally) determined (e.g. calculated) based on one or more temperature measurements corresponding to the breathing apparatus of the wearer. The temperature measurements (e.g. a delta of the measured temperature) may be used to determine a thermal coefficient. In some examples, the thermal coefficient can be used to determine one or more step gradients which can be used to represent (e.g. plot) the thermal load on the wearer of the breathing apparatus. In this manner, the thermal profile of the wearer can be determined (e.g. calculated).

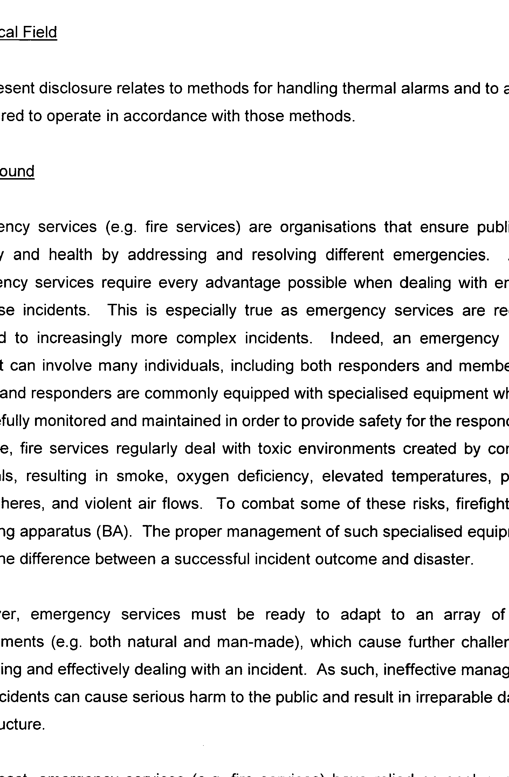

**Fig. 1** illustrates an entity 100 according to an embodiment. The entity 100 can be for handling incident information in a network. The entity 100 may be comprised in (e.g. be part of) the breathing apparatus referred to herein. Alternatively, the entity 100 may be the breathing apparatus referred to herein. In some cases, the entity 100 may be coupled to the BA referred to herein. For example, the entity 100 may be a separate (e.g. control unit) that is coupled to the BA referred to herein.

As illustrated in Fig. 1, the entity 100 comprises processing circuitry (or logic) 102. The processing circuitry 102 controls the operation of the entity 100 and can implement the method described herein in respect of the entity 100. The processing circuitry 102 can be configured or programmed to control the entity 100 in the manner described herein.

The processing circuitry 102 can comprise one or more hardware components, such as one or more processors (e.g. one or more microprocessors, one or more multi-core processors, and/or one or more digital signal processors (DSPs)), one or more processing units, one or more processing modules, and/or one or more controllers (e.g. one or more microcontrollers). The one or more hardware components can be arranged on one or more printed circuit board assemblies (PCBAs) contained in one or more housing components. The one or more hardware components may be configured or programmed (e.g. using software or computer program code) to perform the various functions described herein in respect of the entity 100. In particular implementations, each of the one or more hardware components can be configured to perform, or is for performing, individual or multiple steps of the method described herein in respect of the entity 100. The processing circuitry 102 can be configured to run software to perform the method described herein in respect of the entity 100. The processing circuitry 102 can thus be implemented in numerous ways, with software and/or hardware, to perform the various functions described herein in respect of the entity 100.

Briefly, the processing circuitry 102 of the entity 100 is configured to generate, based on a thermal profile indicative of a thermal exposure of a wearer of a breathing apparatus, one or more of a first thermal alarm and a second thermal alarm. The generating comprises, if the thermal profile meets a first criterion, generating the first thermal alarm at the breathing apparatus, and if the thermal profile meets a second criterion, initiating transmission, towards a network node of the network, of information indicative of the second thermal alarm.

As illustrated in Fig. 1, the entity 100 may optionally comprise a memory 104. Alternatively, the memory 104 may be external to (e.g. separate to or remote from) the entity 100. The memory 104 may comprise any type of non-transitory machine-readable medium, such as at least one cache or system memory. The memory 104 may comprise a volatile or a non-volatile memory. Examples of the memory 104 include, but are not limited to, a random access memory (RAM), a static RAM (SRAM), a dynamic RAM (DRAM), a read-only memory (ROM), a programmable ROM (PROM), an erasable PROM (EPROM), and an electrically erasable PROM (EEPROM), and/or any other memory.

The processing circuitry 102 can be communicatively coupled (e.g. connected) to the memory 104. The processing circuitry 102 may be configured to communicate with and/or connect to the memory 104. The memory 104 may be for storing program code or instructions which, when executed by the processing circuitry 102, cause the entity 100 to operate in the manner described herein. For example, the memory 104 may be configured to store program code or instructions that can be executed by the processing circuitry 102 to cause the entity 100 to operate in accordance with the method described herein in respect of the entity 100. Alternatively or in addition, the memory 104 can be configured to store any information, data, messages, requests, responses, indications, notifications, signals, or similar, that are described herein. The processing circuitry 102 may be configured to control the memory 104 to store information, data, messages, requests, responses, indications, notifications, signals, or similar, that are described herein.

As illustrated in Fig. 1, the entity 100 may optionally comprise a user interface 106. The user interface 106 can be configured to render (or output, display, or provide) information required by or resulting from the method described herein. For example, the user interface 106 may be configured to render (or output, display, or provide) any information, data, messages, requests, responses, indications, notifications, signals, or similar, that are described herein. Alternatively or in addition, the user interface 106 can be configured to receive a user input. For example, the user interface 106 may allow a user to manually enter information or instructions, interact with, and/or control the entity 100. Thus, the user interface 106 may be a user interface that enables the rendering (or outputting, displaying, or providing) of information and/or that enables a user to provide a user input.

The user interface 106 may comprise one or more components for rendering information and/or one or more components that enable the user to provide a user input. The one or more components for rendering information can comprise one or more visual components (e.g. a display or display screen, a graphical user interface (GUI) such as a touch screen, one or more lights such one or more light emitting diodes (LEDs), and/or any other visual component), one or more audio components (e.g. one or more speakers, and/or any other audio component), and/or one or more tactile/haptic components (e.g. a vibration function, or any other haptic/tactile feedback component), or any other user interface, or combination of user interfaces. The one or more components that enable the user to provide a user input can comprise one or more visual components (e.g. one or more switches, one or more buttons, a keypad, a keyboard, a mouse, a graphical user interface (GUI) such as a touch screen, and/or any other visual component), and/or one or more audio components (e.g. one or more microphones, and/or any other audio component), and/or one or more tactile/haptic components (e.g. a vibration function, or any other haptic/tactile feedback component), or any other user interface, or combination of user interfaces.

As illustrated in Fig. 1, the entity 100 may optionally comprise a communications interface (or communications circuitry) 108. The communications interface 108 can be communicatively coupled (e.g. connected) to the processing circuitry 102, the memory 104, and/or the user interface 106. Although the communications interface 108 and the user interface 106 are illustrated as separate interfaces, in other embodiments, the communications interface 108 may be part of the user interface 106. The processing circuitry 102 may be configured to communicate with and/or connect to the communications interface 108. In some embodiments, the processing circuitry 102 can be configured to control the communications interface 108 to operate in the manner described herein. The communications interface 108 can be for enabling the entity 100, or components of the entity 100 (e.g. the processing circuitry 102, the memory 104, the user interface 106, and/or any other components of the entity 100), to communicate with and/or connect to each other and/or one or more other components.

For example, the communications interface 108 may be operable to allow the processing circuitry 102 to communicate with and/or connect to the memory 104 and/or vice versa.

Similarly, the communications interface 108 may be operable to allow the processing circuitry 102 to communicate with and/or connect to the user interface 106 and/or vice versa. Similarly, the communications interface 108 may be operable to allow the processing circuitry 102 to communicate with and/or connect to any one or more other entities (e.g. any one or more of the breathing apparatus referred to herein, the network node referred to herein, or any other entity) referred to herein. The communications interface 108 can be configured to transmit and/or receive information, data, messages, requests, responses, indications, notifications, signals, or similar, that are described herein. The processing circuitry 102 may be configured to control the communications interface 108 to transmit and/or receive information, data, messages, requests, responses, indications, notifications, signals, or similar, that are described herein.

The communications interface 108 may enable the entity 100, or components of the entity 100, to communicate and/or connect in any suitable way. For example, the communications interface 108 may enable the entity 100, or components of the entity 100, to communicate and/or connect wirelessly, via a wired connection, or via any other communication (or data transfer) mechanism. In some wireless implementations, for example, the communications interface 108 may enable the entity 100, or components of the entity 100, to use radio frequency (RF), Wi-Fi, Bluetooth, or any other wireless communication technology to communicate and/or connect.

Although the entity 100 is illustrated in Fig. 1 as comprising a single memory 104, it will be appreciated that the entity 100 may comprise at least one memory (i.e. a single memory or a plurality of memories) 104 that operate in the manner described herein. Similarly, although the entity 100 is illustrated in Fig. 1 as comprising a single user interface 106, it will be appreciated that the entity 100 may comprise at least one user interface (i.e. a single user interface or a plurality of user interfaces) 106 that operate in the manner described herein. Similarly, although the entity 100 is illustrated in Fig. 1 as comprising a single communications interface 108, it will be appreciated that the entity 100 may comprise at least one communications interface (i.e. a single communications interface or a plurality of communications interfaces) 108 that operate in the manner described herein. It will also be appreciated that Fig. 1 only shows the components required to illustrate an embodiment of the entity 100 and, in practical implementations, the entity 100 may comprise additional or alternative components to those shown.

**Fig. 2** illustrates a method according to an embodiment. The method is for handling thermal alarms associated with a wearer of a breathing apparatus. The entity 100 described earlier with reference to Fig. 1 can be configured to operate in accordance with the method as described with reference to Fig. 2. For example, the method can be performed by or under the control of the processing circuitry 102 of the entity 100. The method is computer-implemented.

With reference to Fig. 2, at block 110, based on a thermal profile indicative of a thermal exposure of a wearer of a breathing apparatus, one or more of a first thermal alarm and a second thermal alarm is generated. The entity 100 (e.g. the processing circuitry 102 of the entity 100) may generate one or more of the first thermal alarm and the second thermal alarm. If the thermal profile meets a first criterion, the generation comprises generating the first thermal alarm at the breathing apparatus. If the thermal profile second criterion, the generating comprises initiating transmission, towards a network node of the network, of information indicative of the second thermal alarm. The entity 100 (e.g. the processing circuitry 102 of the entity 100) may initiate transmission of the information towards the network node (e.g. via the communications interface 108 of the entity 100). Therefore, two levels of alarm can be triggered depending on the thermal profile indicative of the thermal exposure of the wearer of the breathing apparatus. The first thermal alarm can be referred to herein as a "Level 1 alarm" and/or a "pre-alarm". The second thermal alarm can be referred to herein as a "Level 2 alarm". The first criterion and/or the second criterion can be configured to prevent excessive thermal exposure for the wearer of the breathing apparatus.

Herein, the term "initiate" can mean, for example, cause or establish. Thus, any reference to an entity "initiating transmission" will be understood to mean that the entity (e.g. processing circuitry of the entity) can be configured to itself transmit (e.g. via a communications interface of the entity) or can be configured to cause another entity to transmit.

As indicated above, the generation of a thermal alarm (e.g. the second thermal alarm) can comprise initiating the transmission of information indicative of said thermal alarm towards a network node. As such, the generation of a thermal alarm can comprise initiating transmission of information indicative of the thermal alarm towards the network node such that the alarm can be output by the network node (e.g. via a user interface of the network node).

In some examples, the thermal profile may meet the first criterion if the thermal profile is indicative of a thermal exposure that is greater or equal to a first exposure threshold value, and less than a second exposure threshold value. The first exposure threshold may be referred to herein as a "Level 1 threshold". In some examples, the thermal profile may meet the second criterion if the thermal profile is indicative of a thermal exposure that is greater or equal to the second exposure threshold value. As such, in some examples, the second criterion can be associated with a higher amount of thermal exposure than the first criterion. The second exposure threshold can be referred to herein as a "Level 2 threshold". The first exposure threshold value and/or the second exposure threshold value can be pre-configured (e.g. prior to the wearer using the breathing apparatus). The first exposure threshold value and/or the second exposure threshold value may be constant. The first exposure threshold value may be configured based on the second exposure threshold value. For example, the first exposure threshold value may be configured to correspond to (e.g. around) 50% of the thermal exposure corresponding to the second exposure threshold value. In some examples, if the thermal profile of the wearer is indicative of a constant increase in thermal exposure, the time taken for the thermal exposure of the wearer to reach the first exposure threshold value may correspond to half the time required for the thermal exposure of the wearer to reach the second exposure threshold value. Therefore, the time taken for a wearer's thermal exposure to reach the first exposure threshold value and/or the second exposure threshold value can depend on the (e.g. ambient) temperature that the wearer (e.g. and the BA) is exposed to. The entity 100 (e.g. the processing circuitry of the entity 100) may be configured to store the first criterion and the second criterion (e.g. in the memory 104 of the entity 100).

The first thermal alarm may be indicative that the wearer's thermal exposure is close to a thermal exposure threshold. "Close to" the thermal exposure threshold can be defined herein as the wearer's thermal exposure being within a certain percentage value (e.g. 1%, 2%, 5%, 10%, 20%, etc.) of the thermal exposure threshold, and/or that the wearer's thermal exposure (e.g. at a current rate of increase of the thermal exposure) will reach and/or exceed the thermal exposure threshold within a certain period of time (e.g. 1s, 2s, 5s, 10s, 20s, etc.). The thermal exposure threshold may, for example, correspond to the first exposure threshold value referred to herein.

In some examples, the thermal exposure of a wearer of a BA may not be a single value. For example, the thermal profile of the wearer of the BA may be indicative of a thermal exposure function. The thermal exposure function can be a function of the ambient temperature, as defined herein, and/or a thermal radiation (e.g. generated in the environment of the wearer of the BA). As such, the thermal profile, as referred to herein, may comprise one or more (e.g. a series of) temperature measurements which are indicative of the thermal exposure of the wearer of the BA. Therefore, in some examples, the one or more temperature measurements can be used to determine (e.g. estimate) the thermal exposure of the wearer of the BA. Details of how temperature can affect the thermal exposure of the wearer of a BA can be found in "Measurements of the Firefighting Environment" J Foster, et al.

The first thermal alarm can be configured to indicate to the wearer of the BA that the wearer is about to exceed a recommended limit of thermal exposure. The recommended limit of thermal exposure may be an industry standard thermal exposure limit. In some examples, the first thermal alarm may only be generated at the breathing apparatus. That is, in these examples, the first thermal alarm (and/or information indicative of the first thermal alarm) may not be transmitted towards another entity of the network (e.g. the network node referred to herein). The first thermal alarm can be associated with a lower thermal exposure than the second thermal alarm, and thus the first thermal alarm may only need to be generated at the breathing apparatus in order to enable the wearer to take corrective action (e.g. move to a lower temperature environment). In examples in which the first thermal alarm is only generated at the breathing apparatus, other entities and/or nodes in the network (e.g. a node operated by an incident controller) may only receive alarm information which indicates that the wearer of the BA requires assistance. In this way, the other entities and/or nodes in the network are only provided with information which requires intervention (e.g. the initiation of a rescue operation to retrieve the wearer of the BA and/or the transmitting an evacuation order to the breathing apparatus).

The second alarm may be indicative that the wearer's thermal exposure has exceeded the thermal exposure threshold. As described herein, if the thermal profile meets the second criterion, then transmission of information indicative of the second thermal alarm is initiated towards the network node of the network. As such, the generation of the second thermal alarm can comprise informing other entities and/or nodes in the network that the wearer's thermal exposure has exceeded the thermal exposure threshold. In this way, an incident controller (e.g. operating the network node) can be made aware that the wearer has received a too high thermal exposure. As such, the incident controller can initiate corrective action in order to protect the health and safety of the wearer of the breathing apparatus. In some examples, the second thermal alarm may be indicative that the wearer is to evacuate their environment (e.g. a burning building).

Generating the first thermal alarm can comprise, for example, generating a notification indicative of the first thermal alarm via an output of the breathing apparatus. Alternatively, or in addition, generating the second thermal alarm can comprise, for example, generating a notification indicative of the second thermal alarm via the output of the breathing apparatus. Thus, in some examples, the entity 100 may be configured to cause the breathing apparatus to generate an output (e.g. a notification). As such, the wearer of the breathing apparatus can be notified of the first thermal alarm and/or the second thermal alarm via an output of the breathing apparatus. In this way, the wearer can be made aware of potential danger associated with the thermal exposure received by the wearer.

In some examples, the notification indicative of the first thermal alarm, and/or the notification indicative of the second thermal alarm can comprise one or more of a visual notification, an auditory notification, and a haptic notification. For example, generating a visual notification indicative of a thermal alarm may comprise outputting a (e.g. flashing) light signal via a light source of the breathing apparatus, and/or displaying (e.g. via a user interface of the breathing apparatus) information indicative of the thermal alarm. Generating an auditory notification indicative of a thermal alarm may, for example, comprise outputting an audio signal indicative of the thermal alarm (e.g. siren and/or a voice recording). Generating a haptic notification indicative may, for example, comprise actuating a vibrating element (e.g. user interface) of the breathing apparatus.

In some examples, the method may comprise, in response to an input obtained via a user interface of the breathing apparatus, terminating the generation of the first thermal alarm. As such, in some examples, the wearer of the breathing apparatus may be able to (e.g. manually) dismiss the first thermal alarm. The user interface of the breathing apparatus may comprise a button and/or a touch screen of the breathing apparatus. In examples in which the entity 100 is the breathing apparatus, the user interface can be the user interface 106 of the entity 100.

In some examples, the generation of the second thermal alarm cannot be terminated via the user interface of the breathing apparatus. As such, in these examples, the wearer of the breathing may not be able to (e.g. manually) dismiss the second thermal alarm. The second thermal alarm may, for example, be dismissed only if the thermal profile no longer meets the second criterion.

The information indicative of the second thermal alarm, the transmission of which is initiated towards the network node, may comprise an identifier of the wearer. For example, the identifier may comprise a unique string (e.g. of numbers and/or letters) which identify the wearer of the breathing apparatus. As such, the information indicative of the second thermal alarm may allow the network node to identify the wearer of the breathing apparatus. In this way, an operator of the network node (e.g. an incident controller) can be made aware of which wearer is associated with the second thermal alarm, and thus the operator of the network node is able to take appropriate corrective action.

The method may comprise generating the thermal profile. For example, the entity 100 (e.g. the processing circuitry 102 of the entity 100) can be configured to generate the thermal profile. The thermal profile is indicative of the thermal exposure of the wearer of the breathing apparatus and thus, in some examples, the thermal profile can be generated based on the environment in which the wearer of the breathing apparatus is operating. The generation of the thermal profile may comprise determining (e.g. measuring) an ambient temperature of the breathing apparatus. The ambient temperature of the breathing apparatus can be defined herein as the temperature of the environment of the breathing apparatus. For example, the ambient temperature of the breathing apparatus can be the temperature of the air surrounding the breathing apparatus. The ambient temperature may be determined continuously and/or periodically. For example, the ambient temperature may be determined every second. Determining the ambient temperature of the breathing apparatus may comprise, for example, obtaining, from a temperature sensor coupled to the breathing apparatus, ambient temperature information. The ambient temperature information can comprise an ambient temperature value. The breathing apparatus may (e.g. externally or internally) comprise the temperature sensor.

Generating the thermal profile may comprise determining whether the ambient temperature of the breathing apparatus is equal to or greater than a first threshold temperature value. The first threshold temperature value can be a pre-configured temperature value. For example, the first threshold temperature value may be 40°C. The first temperature value may be (re)configurable (e.g. by a user). The entity 100 (e.g. the processing circuitry 102 of the entity 100) can store the first threshold temperature value (e.g. in the memory 104 of the entity 100). The determined ambient temperature being equal to or greater than the first threshold temperature value can initiate the generating of the thermal profile. In this way, the generation of the thermal profile can be initiated whenever the ambient temperature reaches a minimum temperature (e.g. which is high enough to cause dangerous thermal exposure to the wearer). As such, the first threshold temperature value can be referred to herein as a "minimum temperature threshold".

Generating the thermal profile may comprise determining, based on the ambient temperature, a thermal coefficient. A time discrete thermal exposure of the wearer of the breathing apparatus may be determined based on the thermal coefficient. For example, the thermal coefficient may be used to determine a (e.g. positive) step gradient. The step gradient can represent a transient thermal load on the wearer of the breathing apparatus. A positive step gradient represents that the thermal load of the wearer is increasing with time. A large positive step gradient may signify a higher criticality of ambient conditions for the wearer.

Generating the thermal profile may comprise determining, based on the thermal coefficient, a time discrete thermal exposure of the wearer of the breathing apparatus. Determining the time discrete thermal exposure of the wearer may comprise integrating one or more step gradients (e.g. determined in the manner described above). The result of the integration may correspond to the time discrete thermal exposure of the wearer. In some examples, the time discrete thermal exposure may be used to determine whether the thermal profile meets the first criterion and/or the second criterion. For example, the result of the integration can be compared to the first criterion and/or the second criterion to determine whether the first thermal alarm and/or the second thermal alarm should be generated (e.g. triggered).

The generation of the thermal profile may be based on the temperature data shown in Table 1 below. Table 1 shows a recommended (e.g. safe) time at which a wearer of a BA may be exposed to different temperatures. The times shown in Table 1 can be indicative of the time to elapse until the thermal profile of the wearer meets the second criterion as defined herein. For example, if the wearer is exposed to a constant temperature of 80°C, the thermal profile of the wearer can be indicative that the thermal exposure of the wearer has met the second criterion once the wearer has been exposed to said temperature for 20 minutes.

**Table 1**

| Temperature (°C) | Time (minutes) |
|---|---|
| 80 | 20 |
| 120 | 10 |
| 160 | 6 |
| 200 | 3.5 |
| 250 | 2 |
| 300 | 1 |

The method described herein may be performed upon activation of the breathing apparatus. Therefore, the method can be performed automatically once the breathing apparatus is turned on, without user intervention, and continuously executed until deactivation of the breathing apparatus. The network referred to herein can be, for example, a radio network.

As indicated above, some of the methods described herein enable the monitoring of a temperature of the environment around the breathing apparatus (e.g. over time), the creation of a temperature profile, and the triggering of thermal alarms after certain (e.g. pre-defined) limits of thermal exposure are exceeded.

There is also provided a system. The system can comprise any one or more of the entity 100 described herein, the breathing apparatus described herein, and the network node described herein.

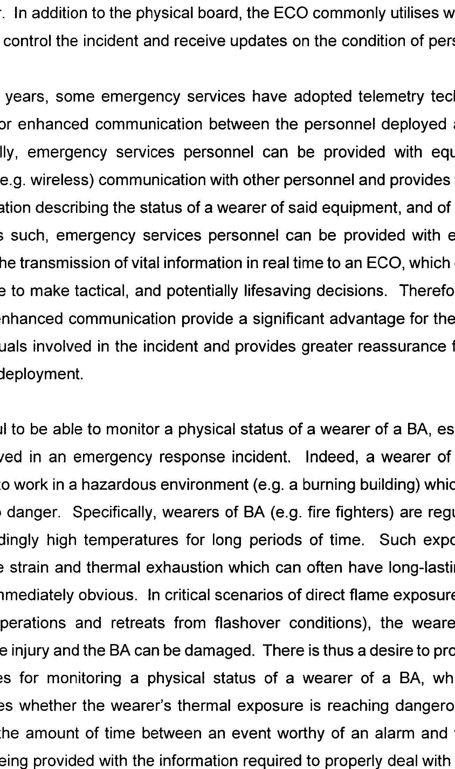

**Fig. 3** illustrates a system according to an embodiment. The system illustrated in Fig. 3 comprises a breathing apparatus 200, a base station 202, and a user 204. In the example illustrated in Fig. 3, the breathing apparatus 200 may comprise the entity 100 described herein, and/or the entity 100 described herein may be the breathing apparatus 200. In the example illustrated in Fig. 3, the breathing apparatus 200 is one of a plurality of breathing apparatuses. However, it will be understood that this is merely an example, and that the method described herein may be applicable to any number of breathing apparatus (e.g. one or more). The base station 202 may comprise the network node as referred to herein, and/or the base station 202 may be the network node referred to herein. Although the example illustrated in Fig. 3 comprises only a single base station 202, it will be understood that the network may comprise any number of base stations (e.g. one or more) according to other examples. Although not illustrated in Fig. 3, in some examples, the network node referred to herein may be a wireless device (e.g. a user equipment (UE)) associated with the user 204. In these examples, the base station may be configured to route communications between the breathing apparatus 200 and the network node (e.g. wireless device).

The base station 202 may communicate with the breathing apparatus 200 (e.g. via a proprietary wireless connection) to (e.g. periodically) obtain a variety of (e.g. telemetry) data. The data may comprise information indicative of an immediate, automatic alarm. The alarm can be associated with one or more (e.g. various) events occurring at the breathing apparatus 200.

As illustrated by arrow 212 of Fig. 3, the base station 202 (e.g. the network node) may be configured to communicate with the breathing apparatus 200. For example, the breathing apparatus 200 may initiate transmission of information indicative of the second thermal alarm, as defined herein, towards the base station 202. As illustrated by blocks 206 and 208 of Fig. 3, the breathing apparatus 200 and the base station 202 may communicate via a radio network. Herein, the communication via the radio network can be referred to as "telemetry radio" communication.

The breathing apparatus 200 can be configured to monitor a parameter and/or a status. For example, the breathing apparatus 200 may be configured to monitor a status of the wearer of the breathing apparatus 200. Alternatively, or in addition, the breathing apparatus 200 may be configured to monitor a status of the breathing apparatus 200 itself (e.g. a remaining amount of breathable gas stored in the breathing apparatus 200). In some examples, the breathing apparatus can be configured to monitor the environment in which the breathing apparatus 200 is located (e.g. by monitoring ambient air temperature as described herein). The breathing apparatus 200 can, for example, constantly obtain (e.g. collect) information about their state, the wearer, and/or their environment. The information can include, for example, one or more of ambient air temperature, remaining pressure (e.g. of the breathing apparatus 200), movement information (e.g. of the wearer), and location information (e.g. of the breathing apparatus 200 and/or the wearer). The information obtained by the breathing apparatus 200 can be used to generate (e.g. create) a profile of the environment and/or the wearer. As such, the obtained information and/or the generated profile(s) can be used to trigger (e.g. automatic) alarms (e.g. such as the thermal alarms described herein). Therefore, the breathing apparatus 200 can be configured to communicate emergency information to other nodes and/or entities in the network. In some examples, the breathing apparatus 200 may be configured to allow a wearer to manually trigger an alarm and/or a withdraw signal.

As illustrated in Fig. 3, the base station 202 may comprise a user interface 210. Therefore, in some examples, the base station 202 can be configured to generate an alarm (e.g. the second thermal alarm described herein) via the user interface 210. As illustrated by arrow 214 of Fig. 3, the user 204 can be made aware of the alarm generated at the base station 202 via the user interface 210. As such, the user 204 (e.g. an incident control operative, such as an ECO) can be made aware of potentially life threatening events (e.g. occurring at the incident in which the breathing apparatus 200 is located), and may take remedial action accordingly.

Although the user interface 210 is illustrated in Fig. 3 as being comprised in the base station 202, it will be appreciated that this is merely an example and that, in other examples, the user interface 210 may be comprised in the wireless device (e.g. separate to the base station 202) referred to above. The wireless device may correspond to the network node referred to herein. For example, the information indicative of the second alarm may be transmitted towards the wireless device (e.g. via the base station 202).

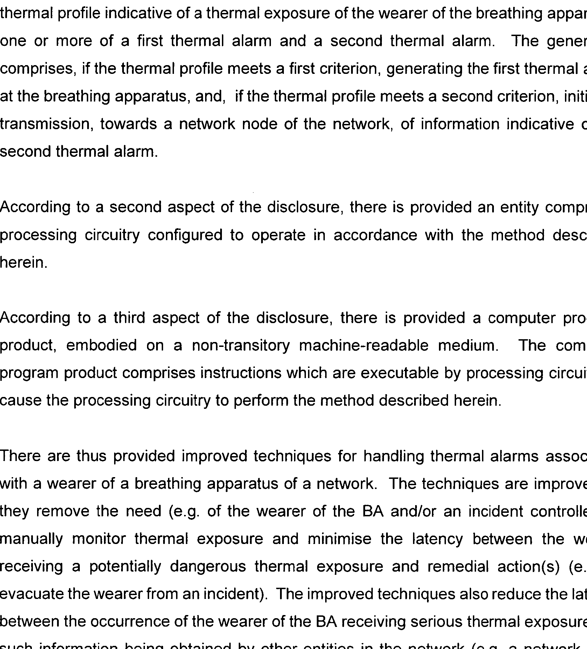

**Fig. 4** is a block diagram illustrating a breathing apparatus 300 according to an embodiment. As shown in the example illustrated in Fig. 4, the breathing apparatus 300 may comprise the entity 100 ("Electronic Control Unit") referred to herein, a user interface 304, a communications interface 310 ("Telemetry Radio"), and a temperature sensor 306. In the example illustrated in Fig. 4, the entity 100 is comprised in the breathing apparatus 300, however it will be understood that this is merely an example and that, in other examples, the entity 100 may be separate from the breathing apparatus 300. As illustrated in Fig. 4, in some examples, the entity 100 may be a control unit.

As illustrated by arrow 312 of Fig. 4, the breathing apparatus 300 can be configured to be worn by a wearer 302. As such, the breathing apparatus may comprise attaching means (e.g. a frame and/or a harness) configured to attach the breathing apparatus 300 to the wearer 302. As illustrated in Fig. 4, the breathing apparatus 300 can comprise a user interface 304. In some examples, an alarm (e.g. the first thermal alarm referred to herein and/or the second thermal alarm referred to herein) can be generated via the user interface 304 of the breathing apparatus 300. As such, and as illustrated by arrow 314 of Fig. 4, the wearer 302 of the breathing apparatus 300 can be advantageously made aware of (e.g. potential) danger to their health and safety.

As also illustrated in Fig. 4, the breathing apparatus 300 can comprise a temperature sensor 306. In the example illustrated in Fig. 4, the temperature sensor 306 is coupled to the breathing apparatus 300 by virtue of being comprised in the breathing apparatus 300. However, it will be understood that, in other examples, the temperature sensor 306 may be coupled to the breathing apparatus 300 in other ways. For example, the temperature sensor 306 may be comprised in the user interface 304 according to some examples. The temperature sensor 306 can be configured to measure temperature (e.g. of the breathing apparatus 300 and/or the environment of the breathing apparatus 300). For example, the temperature sensor 306 can be configured to measure ambient temperature (e.g. of the air surrounding the breathing apparatus 300). As illustrated in Fig. 4, the entity 100 may obtain (e.g. receive) ambient temperature information from the temperature sensor 306. As described herein, the entity 100 may determine an ambient temperature of the breathing apparatus 300 based on the ambient temperature information obtained from the temperature sensor 306. In some examples, the entity 100 may generate a thermal profile based on the ambient temperature, as described herein.

As illustrated in Fig. 4, the entity 100 can initiate transmission of information (e.g. the information indicative of the second thermal alarm as described herein) towards a network node (e.g. a base station). As also illustrated in Fig. 4, initiating transmission of the information may comprise transmitting the information via the communications interface 310. Thus, in some examples, the communications interface 310 may receive the alarm information from the entity 100. As illustrated by arrow 312 of Fig. 4, the communications interface 310 may transmit the alarm information to the network node. In this way, the network node may be able to generate an alarm based on the alarm information received from the breathing apparatus 300.

Therefore, as illustrated by the example system of Fig. 4, emergency alarms (e.g. alerts) can be communicated to the wearer of the breathing apparatus 300 via the user interface 304 of the breathing apparatus 300. Information (e.g. data) can be transmitted to the network node (e.g. the base station), without wearer 302 intervention, enabling an operator (e.g. an ECO) of the network node to continuously monitor the wearer 302, without additional effort required by the wearer 302. This allows the wearer 302 of the breathing apparatus 300 to focus on the task at hand and helps verbal communication channels (e.g. between the breathing apparatus 300 and the base station) to be kept clear.

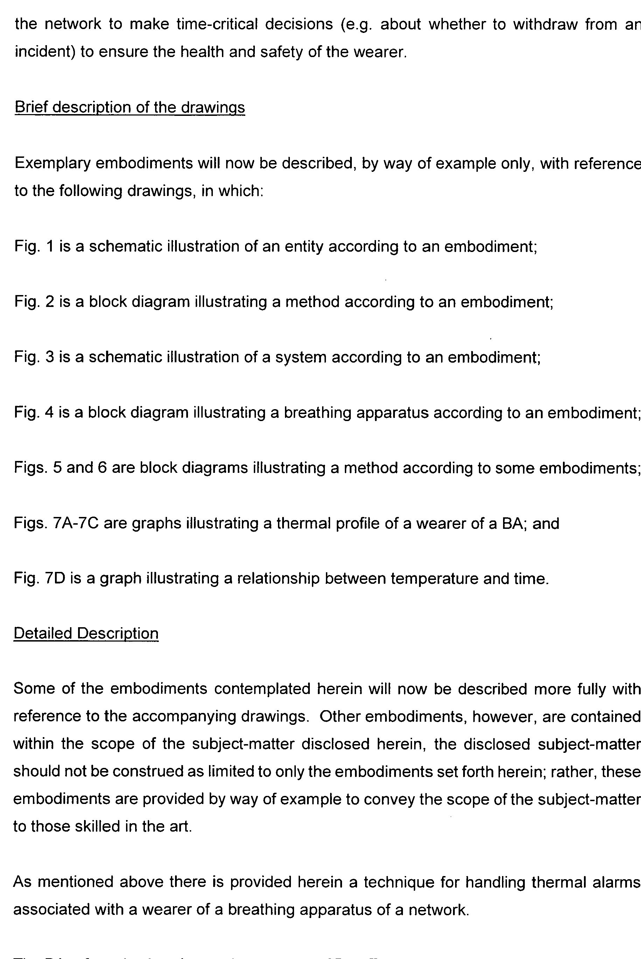

**Fig. 5** is a flow chart illustrating process steps in a method according to an embodiment. The method can be performed by the entity 100 (e.g. the processing circuitry 102 of the entity 100) as described with reference to Fig. 1. The method is for handling thermal alarms associated with a wearer of a breathing apparatus of a network. The steps of the method of Fig. 5 illustrate example ways in which the steps of the method as described with reference to Fig. 2 may be implemented and supplemented in order to achieve the above discussed and additional functionality.

With reference to Fig. 5, at step 400, a breathing apparatus is activated. The breathing apparatus may be activated by, for example, switching on the breathing apparatus (e.g. via a power button of the breathing apparatus). The activation of the breathing apparatus may initiate the performance of the method as described herein. For example, in response to the entity 100 determining that the breathing apparatus is activated, the entity 100 may begin to perform steps of the method as described with reference to Fig. 2, Fig. 5, and/or Fig. 6. As such, in some examples, the method described herein may be performed upon activation of the breathing apparatus. In this way, the method described herein is inherently safer, since the method of handling thermal alarms can be performed immediately upon activation of the breathing apparatus, providing greater reassurance to a wearer of the breathing apparatus.

At step 402 of Fig. 5, an ambient temperature of the breathing apparatus may be determined (e.g. measured). As described herein, determining the ambient temperature of the breathing apparatus may comprise obtaining, from a temperature sensor coupled to the breathing apparatus, ambient temperature information. The temperature sensor referred to herein may be, for example, a digital sensor. The determination of the ambient temperature may be performed periodically (e.g. once per second). The entity 100 referred to herein may be configured to control the temperature sensor.

At step 404 of Fig. 5, the method may comprise determining whether the ambient temperature of the breathing apparatus is equal to or greater than a first threshold temperature value. As shown in the example illustrated in Fig. 5, if the ambient temperature is equal to or greater than the first threshold temperature value, then the method may proceed to the subsequent steps of the method as described with reference to steps 406 to 418 of Fig. 5. As also shown in the example illustrated in Fig. 5, if the ambient temperature is not equal to or greater than a first threshold temperature value, then the method may proceed (e.g. return) to step 402 of Fig. 5 as described above. Thus, the performance of the method (e.g. as described with reference to steps 404 to 418 of Fig. 5) may depend on whether the ambient temperature of the breathing apparatus is equal to or greater than the first threshold temperature value. As such, energy can be used efficiently by only performing parts of the method if the ambient temperature of the breathing apparatus reaches a temperature high enough to warrant the generation of a thermal alarm.

The method illustrated in Fig. 5 may comprise generating a thermal profile indicative of a thermal exposure of a wearer of the breathing apparatus, as described herein. As illustrated by step 406 of Fig. 5, the generation of the thermal profile may comprise determining (e.g. calculating), based on the ambient temperature, a thermal coefficient. The thermal coefficient can be determined based on a change (e.g. delta) of the ambient temperature of the breathing apparatus. For example, the thermal coefficient can be determined based on the change in the ambient temperature of the breathing apparatus over a period of time. As illustrated by step 408 of Fig. 5, generating the thermal profile may comprise determining, based on the thermal coefficient, a positive step gradient. The positive step gradient can correspond to (e.g. represent) a transient thermal load on the wearer of the breathing apparatus. A larger positive step gradient can signify a higher criticality of ambient conditions of the breathing apparatus. Although not explicitly illustrated in Fig. 5, steps 406 and 408 may be repeated such that one or more positive step gradients are determined (e.g. periodically). As illustrated at step 410 of Fig. 5, the resulting one or more positive step gradients may be integrated over a period of time. The integration can produce an integrated value. The period of time may be an operational time of the breathing apparatus (e.g. the time since activation of the breathing apparatus), and/or the period of time since the determination that the ambient temperature is equal to or greater than a first threshold temperature value (as described with reference to step 404 of Fig. 5). As such, generating the thermal profile may comprise determining, based on the thermal coefficient, a time discrete thermal exposure of the wearer of the breathing apparatus. The integrated value can correspond to the time discrete thermal exposure. The thermal exposure of the wearer of the breathing apparatus, indicated by the thermal profile, can correspond to the integrated value.

As illustrated at steps 412 and 414 of Fig. 5, the integrated value can be compared to the first criterion ("Level 1 threshold") referred to herein and/or the second criterion ("Level 2 threshold") referred to herein. For example, the integrated value can be compared to one or more (e.g. predefined) thresholds (e.g. the first exposure threshold value referred to herein, and/or the second exposure threshold value referred to herein) to determine whether a thermal alarm (e.g. the first thermal alarm referred to herein, and/or the second thermal alarm referred to herein) is to be generated (e.g. triggered).

As illustrated at step 412 of Fig. 5, the method may comprise determining whether the integrated value (e.g. thermal exposure of the wearer of the breathing apparatus) meets the first criterion. As illustrated in Fig. 5, if the integrated value does not meet the first criterion, the method proceeds to step 402 of Fig. 5. That is, if the integrated value does not meet the first criterion, then no thermal alarm is generated. As also illustrated at step 412 of Fig. 5, if the integrated value does meet the first criterion (e.g. the integrated value is equal to or greater than the first exposure threshold value) the method proceeds to step 414 of Fig. 5.

As illustrated at step 414 of Fig. 5, the method may comprise determining whether the integrated value meets the second criterion (e.g. whether the integrated value is greater or equal to the second exposure threshold value). As illustrated in Fig. 5, if the integrated value does not meet the second criterion, but meets the first criterion, then the method proceeds to step 416 of Fig. 5. As illustrated at step 416 of Fig. 5, the first thermal alarm is generated at the breathing apparatus. As also illustrated at step 414 of Fig. 5, if the integrated value does meet the second criterion, then the method proceeds to step 418 of Fig. 5. As illustrated at step 418 of Fig. 5, the second alarm is generated by initiating transmission, towards a network node of the network, of information indicative of the second thermal alarm.

As illustrated in Fig. 5, after the generation of a thermal alarm (e.g. the first thermal alarm and/or the second thermal alarm) the method may proceed (e.g. return) to step 402 of Fig. 5. As such, some or all of the method steps illustrated in Fig. 5 may be performed iteratively. In this way, the thermal exposure of the wearer of the breathing apparatus may be monitored continuously and/or periodically to further safeguard the safety of the wearer.

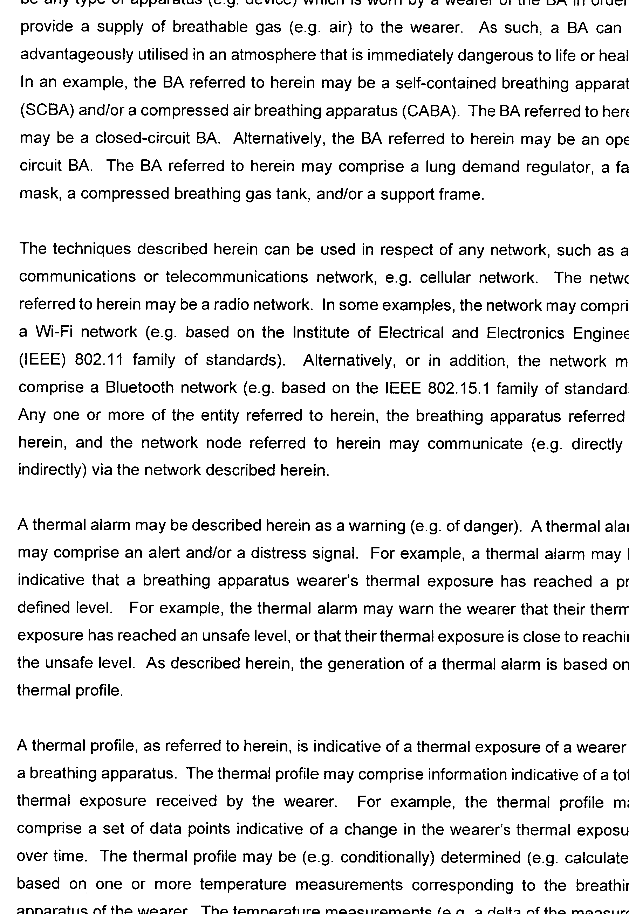

**Fig. 6** is a flow chart illustrating process steps in a method according to an embodiment. The method can be performed by the entity 100 (e.g. the processing circuitry 102 of the entity 100) as described with reference to Fig. 1. The method is for handling thermal alarms associated with a wearer of a breathing apparatus of a network. The steps of the method of Fig. 6 illustrate example ways in which the steps of the method as described with reference to Fig. 2 and/or Fig. 5 may be implemented and supplemented in order to achieve the above discussed and additional functionality. The steps of the method illustrated in Fig. 6 may be performed after the generation of a first thermal alarm and/or a second thermal alarm as described herein. For example, some or all of the steps of Fig. 6 may take place after the method as described with reference to Fig. 2 and/or Fig. 5.

With reference to Fig. 6, steps 500 and 502 can be as described with reference to steps 400 and 402 of Fig. 5, respectively. Although not illustrated in Fig. 6, in some examples, some or all of the method steps described with reference to Fig. 2 and/or Fig. 5 may be performed between step 500 and step 502 of Fig. 6.

At step 504 of Fig. 6, the method may comprise determining whether the ambient temperature of the breathing apparatus is less than the first threshold temperature value as defined herein. As shown in the example illustrated in Fig. 6, if the ambient temperature is less than the first threshold temperature value, then the method may proceed to the subsequent steps of the method as described with reference to steps 506 to 518 of Fig. 6. As also shown in the example illustrated in Fig. 6, if the ambient temperature is not less than the first threshold temperature value, then the method may proceed (e.g. return) to step 502 of Fig. 6. Thus, the performance of the method (e.g. as described with reference to steps 504 to 518 of Fig. 6) may depend on whether the ambient temperature of the breathing apparatus is less than the first threshold temperature value. As mentioned above, the method illustrated in Fig. 6 may be performed after the generation of a thermal alarm (e.g. the first thermal alarm and/or the second thermal alarm). For example, the method illustrated in Fig. 6 may be performed after the wearer of the breathing apparatus has left a high temperature environment where a thermal alarm and a temperature profile was already generated (e.g. by means of the method as described with reference to Fig. 5).

The method illustrated in Fig. 6 may comprise generating a thermal profile indicative of a thermal exposure of a wearer of the breathing apparatus, as described herein. Step 506 of Fig. 6 can be as described with reference to step 406 of Fig. 5.

As illustrated by step 508 of Fig. 6, generating the thermal profile may comprise determining, based on the thermal coefficient, a negative step gradient. The negative step gradient can correspond to (e.g. represent) a transient thermal load on the wearer of the breathing apparatus. For example, a negative step gradient can correspond to a reduction of the thermal load experienced by the wearer of the breathing apparatus. A larger negative step gradient can signify a lower criticality of ambient conditions of the breathing apparatus. The step gradient may be adjusted by a weight coefficient in order to delay the modification of the thermal profile of the wearer of the breathing apparatus to allow for sufficient time to pass for the wearer to recover (e.g. from a large thermal exposure). Although not explicitly illustrated in Fig. 6, steps 506 and 508 may be repeated such that one or more negative step gradients are determined (e.g. periodically). As illustrated at step 510 of Fig. 6, the resulting one or more negative step gradients may be integrated over a period of time. The integration can produce an integrated value. The period of time may be an operational time of the breathing apparatus (e.g. the time since activation of the breathing apparatus), and/or the period of time since the determination that the ambient temperature is less than first threshold temperature value (as described with reference to step 504 of Fig. 6). As such, generating the thermal profile may comprise determining, based on the thermal coefficient, a time discrete thermal exposure of the wearer of the breathing apparatus. The integrated value can correspond to the time discrete thermal exposure. The thermal exposure of the wearer of the breathing apparatus, indicated by the thermal profile, can correspond to the integrated value.

As illustrated at steps 512 and 514 of Fig. 6, the integrated value can be compared to the first criterion ("Level 1 threshold") referred to herein and/or the second criterion ("Level 2 threshold") referred to herein. For example, the integrated value can be compared to one or more (e.g. predefined) thresholds (e.g. the first exposure threshold value referred to herein, and/or the second exposure threshold value referred to herein) to determine whether generation of a thermal alarm (e.g. the first thermal alarm referred to herein, and/or the second thermal alarm referred to herein) is to be terminated (e.g. cleared).

As illustrated at step 512 of Fig. 6, the method may comprise determining whether the integrated value (e.g. thermal exposure of the wearer of the breathing apparatus) meets the first criterion. As illustrated in Fig. 5, if the integrated value does not meet the first criterion (e.g. the integrated value is less that the first exposure threshold value), the method proceeds to step 516 of Fig. 6. That is, if the integrated value does not meet the first criterion, then any generation of the first thermal alarm is terminated. As also illustrated at step 512 of Fig. 6, if the integrated value does meet the first criterion (e.g. the integrated value is equal to or greater than the first exposure threshold value) the method proceeds to step 514 of Fig. 6.

As illustrated at step 514 of Fig. 6, the method may comprise determining whether the integrated value meets the second criterion (e.g. whether the integrated value is greater or equal to the second exposure threshold value). As illustrated in Fig. 6, if the integrated value does not meet the second criterion (e.g. the integrated value is less that the second exposure threshold value), then the method proceeds to step 518 of Fig. 6. That is, if the integrated value does not meet the second criterion, then any generation of the second thermal alarm is terminated, as illustrated at step 518 of Fig. 6. The termination of the second thermal alarm may comprise, for example, initiating transmission of a termination message towards the network node. The termination message can comprise information indicative that any generation of the second thermal alarm is to be terminated (e.g. cleared). In some examples, terminating a thermal alarm (e.g. the first thermal alarm and/or the second the alarm) may comprise terminating an output, at the breathing apparatus, indicative of the thermal alarm.

Although not illustrated in Fig. 6, at step 514 of Fig. 6, if the integrated value does meet the second criterion, then the method may proceed (e.g. return) to step 502 of Fig. 5. As such, some or all of the method steps illustrated in Fig. 5 may be performed iteratively. In this way, the thermal exposure of the wearer of the breathing apparatus may be monitored continuously and/or periodically to further safeguard the safety of the wearer.

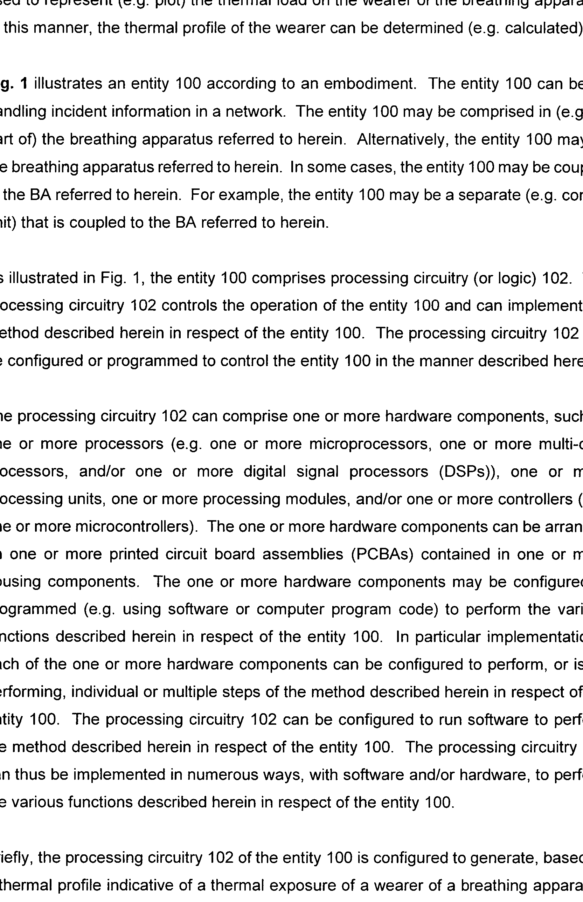

**Figure 7A-7C** show graphs illustrating a thermal profile of a wearer of a BA over time. More specifically, the graphs of Figs. 7A-7C illustrate how an integrated value, which may correspond to the time discrete thermal exposure as referred to herein, can change over time with respect to temperature.

As illustrated in the example graphs of Figs. 7A-7C, the first criterion is met if a first exposure threshold value, as defined herein, is greater than or equal to a value of 4000, and the second criterion is met if a second exposure threshold value, as defined herein, is greater than or equal to a value of 10000.

In the example graph shown in Fig. 7A, the wearer is exposed to an (constant) ambient temperature, as defined herein, of 80°C. As such, the thermal profile of the wearer meets the first criterion after 500s of total exposure time, and the thermal profile of the wearer meets the second criterion after a total of around 1300s.

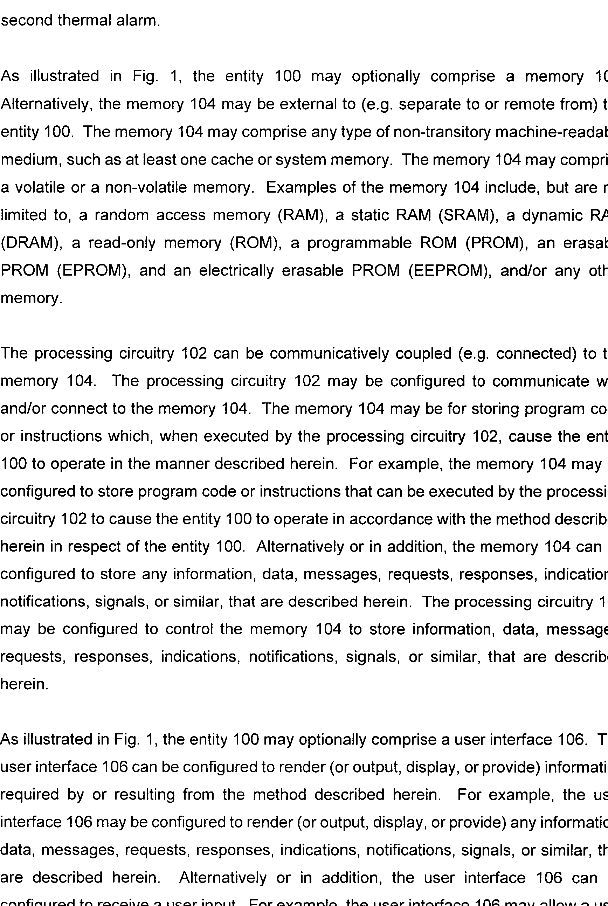

In the example graph shown in Fig. 7B, the wearer is exposed to an ambient temperature of 80°C for 15 minutes, and is then exposed to an ambient temperature of 120°C for 5 minutes. As such, the thermal profile of the wearer meets the first criterion after 500s of total exposure time, and the thermal profile of the wearer meets the second criterion after a total of around 1100s. As illustrated in Fig. 7B, the increase in ambient temperature causes the thermal profile of the wearer to increase at an increased rate.

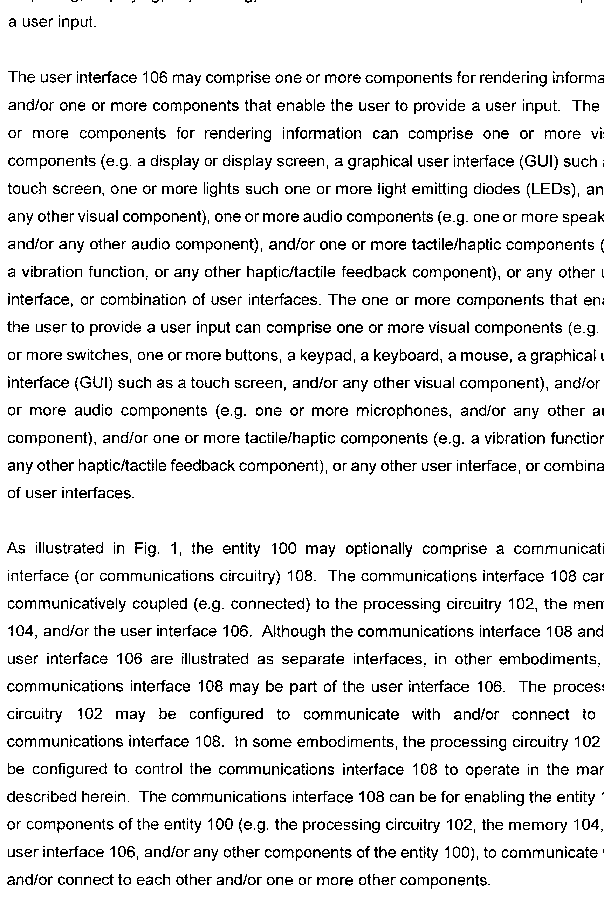

In the example graph shown in Fig. 7C, the wearer is exposed to an ambient temperature of 120°C for 15 minutes, and is then exposed to an ambient temperature of 30°C for 10 minutes. As such, the thermal profile of the wearer meets the first criterion after around 200s of total exposure time, and the thermal profile of the wearer meets the second criterion after a total exposure time of around 600s. As illustrated in Fig. 7C, when exposed to an ambient temperature of 30°C, the thermal profile of the wearer eventually reduces to a negligible amount. Therefore, in the example illustrated by Fig. 7C, the thermal exposure of the wearer at time 1500s is effectively zero, as the wearer has been able to cool down.

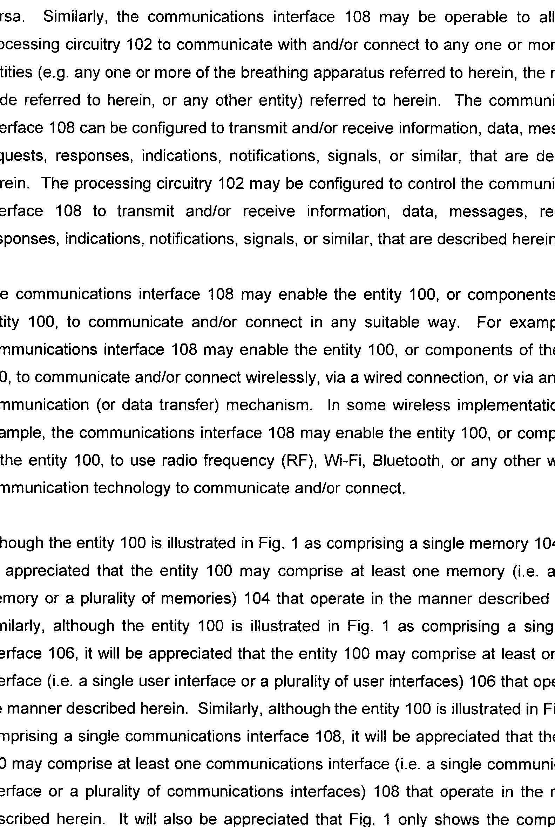

**Fig. 7D** illustrates a graph showing the relationship between temperature and a safe exposure time. The graph shown in Fig. 7D corresponds to the values shown in Table 1 above. As shown in Fig. 7D, as the temperature increases, the amount of time at which a wearer can safely be exposed to the temperature decreases exponentially. The data illustrated in Fig. 7D can be used to determine the exposure threshold values referred to herein.

The curve shown in Fig. 7D is an approximation using a second order polynomial equation. This second order polynomial equation is shown as Equation 1 below, where "t" is equal to time (in seconds), and "x" is equal to temperature (in degrees Celsius):

$$ t = \frac{60 * 135424}{x^2} $$

**Equation 1**

There is also provided a computer program embodied on a non-transitory machine-readable medium. The non-transitory machine-readable medium comprises instructions. The instructions are executable such that, on execution by a suitable computer or processor, the computer or processor is caused to perform the method described herein. The non-transitory machine-readable medium may be, for example, any entity or device capable of carrying the computer program product. For example, the non-transitory machine-readable medium may include a data storage, such as a ROM (such as a CD-ROM or a semiconductor ROM) or a magnetic recording medium (such as a hard disk). Furthermore, the non-transitory machine-readable medium may be a transmissible carrier, such as an electric or optical signal, which may be conveyed via electric or optical cable or by radio or other means. When the computer program product is embodied in such a signal, the non-transitory machine-readable medium may be constituted by such a cable or other device or means. Alternatively, the non-transitory machine-readable medium may be an integrated circuit in which the computer program product is embedded, the integrated circuit being adapted to perform, or used in the performance of, the method described herein.

The techniques described herein facilitate the improved handling of thermal alarms associated with a wearer of a breathing apparatus. That is, the techniques described herein provide for the monitoring of thermal exposure of a wearer of the breathing apparatus, and/or the breathing apparatus itself, and automatically generate specific alarms to reduce the risk of excessive thermal exposure for the wearer. As a result, a thermal alarm can be generated appropriately without the need for manual interaction by the wearer of the breathing apparatus. The use of a thermal profile indicative of the wearer's thermal exposure ensures that the generation of any thermal alarm is performed accurately. In some examples, the generating involves informing a network node of the network, which can correspond to an operator of the incident to which the wearer of the breathing apparatus is deployed. In this way, the method provides for the notification of relevant network entities in an event that the wearer of the breathing apparatus suffers an unsafe thermal exposure. The automatic generation of thermal alarms in this way decreases latency between the conditions required for the generation of the alarms and the instigation of remedial action.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored or distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

**Claims**

1. A computer-implemented method for handling thermal alarms associated with a wearer (302) of a breathing apparatus (200, 300) of a network, the method comprising:
    generating (110), based on a thermal profile indicative of a thermal exposure of the wearer (302) of the breathing apparatus (200, 300), one or more of a first thermal alarm and a second thermal alarm, wherein the generating comprises:

    if the thermal profile meets a first criterion, generating the first thermal alarm at the breathing apparatus (200, 300); and
    if the thermal profile meets a second criterion, initiating transmission, towards a network node (202) of the network, of information indicative of the second thermal alarm.

2. The method as claimed in any of the preceding claims, wherein:

   generating the first thermal alarm comprises generating, via an output of the breathing apparatus (200, 300), a notification indicative of the first thermal alarm; and/or
   generating the second thermal alarm comprises generating, via the output of the breathing apparatus (200, 300), a notification indicative of the second thermal alarm.

3. The method as claimed in claim 2, wherein the notification indicative of the first thermal alarm and/or the notification indicative of the second thermal alarm comprises one or more of:

   a visual notification;
   an auditory notification; and
   a haptic notification.

4. The method as claimed in claim 2 or 3, wherein:

   the method comprises, in response to an input obtained via a user interface (304) of the breathing apparatus (300), terminating the generation of the first thermal alarm; and/or
   the generation of the second thermal alarm cannot be terminated via the user interface (304) of the breathing apparatus (300).

5. The method as claimed in any of the preceding claims, wherein the information indicative of the second thermal alarm comprises an identifier of the wearer (302).

6. The method as claimed in any of the preceding claims, wherein:

   the first thermal alarm is indicative that the wearer's thermal exposure is close to a thermal exposure threshold; and/or
   the second alarm is indicative that the wearer's thermal exposure has exceeded the thermal exposure threshold.

7. The method as claimed in any of the preceding claims, the method comprising:
   generating the thermal profile.

8. The method as claimed in claim 7, wherein generating the thermal profile comprises:
   determining an ambient temperature of the breathing apparatus.

9. The method as claimed in claim 8, wherein determining the ambient temperature of the breathing apparatus comprises:
   obtaining, from a temperature sensor (306) coupled to the breathing apparatus (300), ambient temperature information.

10. The method as claimed in claim 8 or 9, wherein generating the thermal profile comprises:

    determining whether the ambient temperature of the breathing apparatus is equal to or greater than a first threshold temperature value;
    determining, based on the ambient temperature, a thermal coefficient; and
    determining, based on the thermal coefficient, a time discrete thermal exposure of the wearer of the breathing apparatus.

11. The method as claimed in any of the preceding claims, wherein:

    the thermal profile meets the first criterion if the thermal profile is indicative of a thermal exposure that is greater or equal to a first exposure threshold value, and less than a second exposure threshold value; and
    the thermal profile meets the second criterion if the thermal profile is indicative of a thermal exposure that is greater or equal to the second exposure threshold value.

12. The method as claimed in any of the preceding claims, wherein:
    the method is performed upon activation of the breathing apparatus (200, 300).

13. The method as claimed in any of the preceding claims, wherein:
    the network is a radio network.

14. An entity (100) comprising:
    processing circuitry (102) configured to operate in accordance with any of claims 1 to 13.

15. A computer program product, embodied on a non-transitory machine-readable medium, comprising instructions which are executable by processing circuitry to cause the processing circuitry to perform the method according to any of claims 1 to 13.

cal Field

:sent disclosure relates to methods for handling thermal alarms and to a
red to operate in accordance with those methods.

ound

:ncy services (e.g. fire services) are organisations that ensure publi
/ and health by addressing and resolving different emergencies. .
:ncy services require every advantage possible when dealing with er
se incidents.  This is especially true as emergency services are re
d to increasingly more complex incidents.  Indeed, an emergency
t can involve many individuals, including both responders and membe
and responders are commonly equipped with specialised equipment wl
fully monitored and maintained in order to provide safety for the respon(
e, fire services regularly deal with toxic environments created by cor
Is, resulting in smoke, oxygen deficiency, elevated temperatures, p
heres, and violent air flows.  To combat some of these risks, firefight
ng apparatus (BA).  The proper management of such specialised equipi
ne difference between a successful incident outcome and disaster.

er, emergency services must be ready to adapt to an array of
ments (e.g. both natural and man-made), which cause further challer
ing and effectively dealing with an incident.  As such, ineffective manag
cidents can cause serious harm to the public and result in irreparable di
icture.

:. In addition to the physical board, the ECO commonly utilises w

control the incident and receive updates on the condition of per:

years, some emergency services have adopted telemetry tecl

or enhanced communication between the personnel deployed ;

lly, emergency services personnel can be provided with equ

e.g. wireless) communication with other personnel and provides

ation describing the status of a wearer of said equipment, and of

; such, emergency services personnel can be provided with e

he transmission of vital information in real time to an ECO, which

e to make tactical, and potentially lifesaving decisions. Therefo

nhanced communication provide a significant advantage for the

uals involved in the incident and provides greater reassurance t

deployment.

il to be able to monitor a physical status of a wearer of a BA, es

ved in an emergency response incident. Indeed, a wearer of

o work in a hazardous environment (e.g. a burning building) whic

danger. Specifically, wearers of BA (e.g. fire fighters) are regu

dingly high temperatures for long periods of time. Such expc

e strain and thermal exhaustion which can often have long-lastir

imediately obvious. In critical scenarios of direct flame exposure

perations and retreats from flashover conditions), the weare

e injury and the BA can be damaged. There is thus a desire to prc

es for monitoring a physical status of a wearer of a BA, whi

es whether the wearer's thermal exposure is reaching dangero

he amount of time between an event worthy of an alarm and

eing provided with the information required to properly deal with

thermal profile indicative of a thermal exposure of the wearer of the breathing appar
one or more of a first thermal alarm and a second thermal alarm. The gener
comprises, if the thermal profile meets a first criterion, generating the first thermal a
at the breathing apparatus, and, if the thermal profile meets a second criterion, initi
transmission, towards a network node of the network, of information indicative c
second thermal alarm.

According to a second aspect of the disclosure, there is provided an entity compi
processing circuitry configured to operate in accordance with the method desc
herein.

According to a third aspect of the disclosure, there is provided a computer pro
product, embodied on a non-transitory machine-readable medium. The com
program product comprises instructions which are executable by processing circui
cause the processing circuitry to perform the method described herein.

There are thus provided improved techniques for handling thermal alarms assoc
with a wearer of a breathing apparatus of a network. The techniques are improve
they remove the need (e.g. of the wearer of the BA and/or an incident controlle
manually monitor thermal exposure and minimise the latency between the w
receiving a potentially dangerous thermal exposure and remedial action(s) (e.
evacuate the wearer from an incident). The improved techniques also reduce the lat
between the occurrence of the wearer of the BA receiving serious thermal exposure
such information being obtained by other entities in the network (e.g. a network

the network to make time-critical decisions (e.g. about whether to withdraw from an incident) to ensure the health and safety of the wearer.

## Brief description of the drawings

Exemplary embodiments will now be described, by way of example only, with reference to the following drawings, in which:

Fig. 1 is a schematic illustration of an entity according to an embodiment;

Fig. 2 is a block diagram illustrating a method according to an embodiment;

Fig. 3 is a schematic illustration of a system according to an embodiment;

Fig. 4 is a block diagram illustrating a breathing apparatus according to an embodiment;

Figs. 5 and 6 are block diagrams illustrating a method according to some embodiments;

Figs. 7A-7C are graphs illustrating a thermal profile of a wearer of a BA; and

Fig. 7D is a graph illustrating a relationship between temperature and time.

## Detailed Description

Some of the embodiments contemplated herein will now be described more fully with reference to the accompanying drawings. Other embodiments, however, are contained within the scope of the subject-matter disclosed herein, the disclosed subject-matter should not be construed as limited to only the embodiments set forth herein; rather, these embodiments are provided by way of example to convey the scope of the subject-matter to those skilled in the art.

As mentioned above there is provided herein a technique for handling thermal alarms associated with a wearer of a breathing apparatus of a network.

be any type of apparatus (e.g. device) which is worn by a wearer of the BA in order

provide a supply of breathable gas (e.g. air) to the wearer. As such, a BA can advantageously utilised in an atmosphere that is immediately dangerous to life or heal In an example, the BA referred to herein may be a self-contained breathing apparat (SCBA) and/or a compressed air breathing apparatus (CABA). The BA referred to here may be a closed-circuit BA. Alternatively, the BA referred to herein may be an ope circuit BA. The BA referred to herein may comprise a lung demand regulator, a fa mask, a compressed breathing gas tank, and/or a support frame.

The techniques described herein can be used in respect of any network, such as a communications or telecommunications network, e.g. cellular network. The netwc referred to herein may be a radio network. In some examples, the network may compri a Wi-Fi network (e.g. based on the Institute of Electrical and Electronics Enginee (IEEE) 802.11 family of standards). Alternatively, or in addition, the network m comprise a Bluetooth network (e.g. based on the IEEE 802.15.1 family of standard: Any one or more of the entity referred to herein, the breathing apparatus referred herein, and the network node referred to herein may communicate (e.g. directly indirectly) via the network described herein.

A thermal alarm may be described herein as a warning (e.g. of danger). A thermal alaı may comprise an alert and/or a distress signal. For example, a thermal alarm may I indicative that a breathing apparatus wearer's thermal exposure has reached a pr defined level. For example, the thermal alarm may warn the wearer that their therm exposure has reached an unsafe level, or that their thermal exposure is close to reachiı the unsafe level. As described herein, the generation of a thermal alarm is based on thermal profile.

A thermal profile, as referred to herein, is indicative of a thermal exposure of a wearer a breathing apparatus. The thermal profile may comprise information indicative of a tot thermal exposure received by the wearer. For example, the thermal profile m; comprise a set of data points indicative of a change in the wearer's thermal exposu over time. The thermal profile may be (e.g. conditionally) determined (e.g. calculate based on one or more temperature measurements corresponding to the breathir apparatus of the wearer. The temperature measurements (e.g. a delta of the measur

ied to represent (e.g. plot) the thermal load on the wearer of the breathing appara

this manner, the thermal profile of the wearer can be determined (e.g. calculated)

g. 1 illustrates an entity 100 according to an embodiment. The entity 100 can be

indling incident information in a network. The entity 100 may be comprised in (e.g

irt of) the breathing apparatus referred to herein. Alternatively, the entity 100 may

e breathing apparatus referred to herein. In some cases, the entity 100 may be coup

the BA referred to herein. For example, the entity 100 may be a separate (e.g. cor

iit) that is coupled to the BA referred to herein.

; illustrated in Fig. 1, the entity 100 comprises processing circuitry (or logic) 102.

ocessing circuitry 102 controls the operation of the entity 100 and can implement

ethod described herein in respect of the entity 100. The processing circuitry 102

i configured or programmed to control the entity 100 in the manner described here

ie processing circuitry 102 can comprise one or more hardware components, such

ie or more processors (e.g. one or more microprocessors, one or more multi-c

ocessors, and/or one or more digital signal processors (DSPs)), one or m

ocessing units, one or more processing modules, and/or one or more controllers (

ie or more microcontrollers). The one or more hardware components can be arran

i one or more printed circuit board assemblies (PCBAs) contained in one or m

iusing components. The one or more hardware components may be configuret

ogrammed (e.g. using software or computer program code) to perform the vari

nctions described herein in respect of the entity 100. In particular implementatic

ich of the one or more hardware components can be configured to perform, or is

irforming, individual or multiple steps of the method described herein in respect of

itity 100. The processing circuitry 102 can be configured to run software to perf

a method described herein in respect of the entity 100. The processing circuitry

in thus be implemented in numerous ways, with software and/or hardware, to perf

a various functions described herein in respect of the entity 100.

iefly, the processing circuitry 102 of the entity 100 is configured to generate, basec

thermal profile indicative of a thermal exposure of a wearer of a breathing appara

second thermal alarm.

As illustrated in Fig. 1, the entity 100 may optionally comprise a memory 1( Alternatively, the memory 104 may be external to (e.g. separate to or remote from) t entity 100. The memory 104 may comprise any type of non-transitory machine-readak medium, such as at least one cache or system memory. The memory 104 may compri a volatile or a non-volatile memory. Examples of the memory 104 include, but are r limited to, a random access memory (RAM), a static RAM (SRAM), a dynamic R/ (DRAM), a read-only memory (ROM), a programmable ROM (PROM), an erasak PROM (EPROM), and an electrically erasable PROM (EEPROM), and/or any oth memory.

The processing circuitry 102 can be communicatively coupled (e.g. connected) to t memory 104. The processing circuitry 102 may be configured to communicate w and/or connect to the memory 104. The memory 104 may be for storing program co or instructions which, when executed by the processing circuitry 102, cause the ent 100 to operate in the manner described herein. For example, the memory 104 may I configured to store program code or instructions that can be executed by the processii circuitry 102 to cause the entity 100 to operate in accordance with the method describ herein in respect of the entity 100. Alternatively or in addition, the memory 104 can I configured to store any information, data, messages, requests, responses, indicatior notifications, signals, or similar, that are described herein. The processing circuitry 1 may be configured to control the memory 104 to store information, data, message requests, responses, indications, notifications, signals, or similar, that are describ herein.

As illustrated in Fig. 1, the entity 100 may optionally comprise a user interface 106. T user interface 106 can be configured to render (or output, display, or provide) informati required by or resulting from the method described herein. For example, the us interface 106 may be configured to render (or output, display, or provide) any informatic data, messages, requests, responses, indications, notifications, signals, or similar, th are described herein. Alternatively or in addition, the user interface 106 can I configured to receive a user input. For example, the user interface 106 may allow a us

a user input.

The user interface 106 may comprise one or more components for rendering informa
and/or one or more components that enable the user to provide a user input. The
or more components for rendering information can comprise one or more vi:
components (e.g. a display or display screen, a graphical user interface (GUI) such ;
touch screen, one or more lights such one or more light emitting diodes (LEDs), an
any other visual component), one or more audio components (e.g. one or more speak
and/or any other audio component), and/or one or more tactile/haptic components (
a vibration function, or any other haptic/tactile feedback component), or any other ı
interface, or combination of user interfaces. The one or more components that en;
the user to provide a user input can comprise one or more visual components (e.g.
or more switches, one or more buttons, a keypad, a keyboard, a mouse, a graphical ı
interface (GUI) such as a touch screen, and/or any other visual component), and/or
or more audio components (e.g. one or more microphones, and/or any other aı
component), and/or one or more tactile/haptic components (e.g. a vibration functior
any other haptic/tactile feedback component), or any other user interface, or combina
of user interfaces.

As illustrated in Fig. 1, the entity 100 may optionally comprise a communicati
interface (or communications circuitry) 108. The communications interface 108 car
communicatively coupled (e.g. connected) to the processing circuitry 102, the men
104, and/or the user interface 106. Although the communications interface 108 and
user interface 106 are illustrated as separate interfaces, in other embodiments,
communications interface 108 may be part of the user interface 106. The proces:
circuitry 102 may be configured to communicate with and/or connect to
communications interface 108. In some embodiments, the processing circuitry 102
be configured to control the communications interface 108 to operate in the mar
described herein. The communications interface 108 can be for enabling the entity '
or components of the entity 100 (e.g. the processing circuitry 102, the memory 104,
user interface 106, and/or any other components of the entity 100), to communicate ı
and/or connect to each other and/or one or more other components.

rsa. Similarly, the communications interface 108 may be operable to all ocessing circuitry 102 to communicate with and/or connect to any one or mor tities (e.g. any one or more of the breathing apparatus referred to herein, the r de referred to herein, or any other entity) referred to herein. The communi erface 108 can be configured to transmit and/or receive information, data, mes juests, responses, indications, notifications, signals, or similar, that are de rein. The processing circuitry 102 may be configured to control the communi erface 108 to transmit and/or receive information, data, messages, re sponses, indications, notifications, signals, or similar, that are described herein

e communications interface 108 may enable the entity 100, or components tity 100, to communicate and/or connect in any suitable way. For examp mmunications interface 108 may enable the entity 100, or components of the 0, to communicate and/or connect wirelessly, via a wired connection, or via an nmunication (or data transfer) mechanism. In some wireless implementatic ample, the communications interface 108 may enable the entity 100, or comp the entity 100, to use radio frequency (RF), Wi-Fi, Bluetooth, or any other w nmunication technology to communicate and/or connect.

hough the entity 100 is illustrated in Fig. 1 as comprising a single memory 10 appreciated that the entity 100 may comprise at least one memory (i.e. a mory or a plurality of memories) 104 that operate in the manner described nilarly, although the entity 100 is illustrated in Fig. 1 as comprising a singl erface 106, it will be appreciated that the entity 100 may comprise at least or erface (i.e. a single user interface or a plurality of user interfaces) 106 that ope manner described herein. Similarly, although the entity 100 is illustrated in Fi nprising a single communications interface 108, it will be appreciated that the 0 may comprise at least one communications interface (i.e. a single communi erface or a plurality of communications interfaces) 108 that operate in the r scribed herein. It will also be appreciated that Fig. 1 only shows the comp

Europäisches
Patentamt
European
Patent Office
Office européen
des brevets

**EUROPEAN SEARCH REPORT**

Application Number

EP 24 38 6034

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/148871 A1 (BEDINGHAM WILLIAM [US] ET AL) 18 May 2023 (2023-05-18) * paragraph [0027] - paragraph [0032]; figure 1 * * paragraph [0041] - paragraph [0042] * * paragraph [0151] - paragraph [0164]; figures 10,11 * * paragraph [0120] * | 1-15 | INV. G08B21/02 A62B9/00 |
| X | US 2019/180594 A1 (WILLIAMS CEDRIC [US]) 13 June 2019 (2019-06-13) * abstract * * paragraph [0032] - paragraph [0040]; figures 2,3 * * paragraph [0028] * | 1-15 | |

|  |
|---|
| TECHNICAL FIELDS SEARCHED (IPC) |
| G08B A62B |

The present search report has been drawn up for all claims

| Place of search | Date of completion of the search | Examiner |
|---|---|---|
| Munich | 10 September 2024 | Heß, Rüdiger |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

# EP 4 625 381 A1

## ANNEX TO THE EUROPEAN SEARCH REPORT
## ON EUROPEAN PATENT APPLICATION NO.

EP 24 38 6034

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2024

| Patent document cited in search report | Publication date | Patent family member(s) | | Publication date |
|---|---|---|---|---|
| US 2023148871 A1 | 18-05-2023 | EP | 4142885 A1 | 08-03-2023 |
| | | US | 2023148871 A1 | 18-05-2023 |
| | | WO | 2021220108 A1 | 04-11-2021 |
| US 2019180594 A1 | 13-06-2019 | CN | 109313839 A | 05-02-2019 |
| | | EP | 3443549 A1 | 20-02-2019 |
| | | KR | 20180137515 A | 27-12-2018 |
| | | US | 2019180594 A1 | 13-06-2019 |
| | | WO | 2017181036 A1 | 19-10-2017 |

EPO FORM P0459

For more details about this annex : see Official Journal of the European Patent Office, No. 12/82